# EUROPEAN PATENT APPLICATION

(11) **EP 3 026 950 A2**
(43) Date of publication of application: **01.06.2016**
(21) Application number: 15196562.1
(22) Date of filing: 26.11.2015
(51) Int. Cl.: H04W 24/02

(54) **TELECOMMUNICATIONS CONTROL WITH SERVICE AWARE OPTIMIZATION IN A SELFORGANIZING NETWORK**

(30) Priority: 28.11.2014 GB 201421228
(71) Applicant: Vodafone IP Licensing Limited, The Connection Newbury Berkshire RG14 2FN (GB)
(72) Inventor: LU, Zhanhong, London, W2 6BY (GB); DUNKIN, Andrew, London, W2 6BY (GB)
(74) Representative: Boult Wade Tennant

(57) **Abstract**

A self-organizing network engine is described for use in a telecommunications network. The self-organizing network engine is configured to receive one or more quality of service indicators describing a quality of service experienced by a user equipment device when receiving a service from a telecommunications network comprising the self-organizing network engine.

To be accompanied, when published, by Figure 4 of the accompanying drawings.

## Description

### Background

Management and control of telecommunications networks is an ongoing problem. Service providers and infrastructure providers constantly look for ways to more efficiency use network resources, improve performance, balance traffic load, reduce risk of malfunction, and/or meet service level agreements.

With cellular network becoming more complex, network planning needs to be made easier and smarter: planning, configuration, management, optimization and healing need to be automated to bring improvements. With revenue per measured Mbit decreasing, operators need to reduce operational expenditures. As a result, the concept of the Self-Organizing Network (SON) is growing in interest and use.

SON is an intelligent platform that automatically optimizes 2G, 3G and 4G networks. The Third Generation Partnership Project (3GPP) has introduced the SON concept into Release 8, and defined a set of use cases that govern a network including the planning, deployment, optimization and maintenance activities. There are three main areas in which the self-organizing network operates, as follows.

Self-configuration, also called "plug and play", defines and implements the network parameters automatically, requiring little manual intervention in the network configuration process, and enables more reliable and efficient macro and small cell rollout.

Self-optimization adapts parameters to their optimal value based on cell performance statistics, and replaces repetitive routine operations with automation so that high operational efficiency can be achieved.

Self-healing detects network outage automatically and quickly implements revised parameters to compensate, enables the impact on customers due to a failed cell to be minimized.

The embodiments described below are not limited to implementations which solve any or all of the disadvantages of known telecommunications network control systems.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one aspect, a self-organizing network engine is described for use in a telecommunications network. The self-organizing network engine is configured to identify a service being provided to a user equipment (UE) and determine a network reconfiguration for the telecommunications network according to the service being provided. The self-organizing network engine is further configured to command the telecommunications network to implement the network reconfiguration. Optionally, the user equipment is categorized or classified into a group according to the service being provided. The network reconfiguration may be chosen from a set of predetermined reconfigurations based upon the group in which the user equipment has been placed. Preferably, in this aspect, the engine is configured to receive one or more service quality indicators describing a quality of service experienced by the user equipment when receiving the service from the telecommunications network comprising the self-organizing network engine. The engine is further configured to determine a network reconfiguration for the telecommunications network according to the service being provided and the service quality indicator received.

In another aspect, a self-organizing network engine is described for use in a telecommunications network. The self-organizing network engine is configured to receive one or more quality of service indicators describing a quality of service experienced by a user equipment device when receiving a service from a telecommunications network comprising the self-organizing network engine. The self-organizing network engine is further configured to obtain, from a profile relating to the user equipment, one or more quality of service requirements for the service being received; to determine a network reconfiguration for the telecommunications network according to the one or more quality of service requirements and the one or more quality of service indicators; and to command the telecommunications network to implement the network reconfiguration.

In both aspects, the network reconfiguration may comprise one or more of (i) directing the user equipment device to a selected radio access technology; (ii) directing the user equipment device to a selected network layer; or (iii) reallocating network resources available to the user equipment device.

The self-organizing network engine may be configured to determine the network reconfiguration by optimizing one or more network parameters.

The telecommunications network may comprise a plurality of radio access technologies, wherein the network parameters comprise one or more inter-radio-access-technology handover thresholds. The self-organizing network engine may be configured to optimize the inter-radio-access-technology handover thresholds to select one of the radio access technologies to provide the service according to the one or more quality of service requirements.

The one or more quality of service indicators may comprise a matrix storing one or more quality of service indicators for each of a plurality of services offered by the telecommunications network.

There is also provided a computer-implemented method of optimizing a telecommunications network. The method may comprise receiving one or more quality of service indicators describing a quality of service experienced by a user equipment when receiving a service from the telecommunications network; obtaining, from a profile relating to the user equipment, one or more quality of service requirements for the service being received; determining a network reconfiguration for the telecommunications network according to the one or more quality of service requirements and the one or more quality of service indicators; and commanding the telecommunications network to implement the network reconfiguration.

The method may comprise determining the network reconfiguration by optimizing one or more network parameters.

In the cases that the telecommunications network comprises a plurality of radio access technologies, and wherein the network parameters comprise one or more inter-radio-access-technology handover thresholds, the method may further comprise optimizing the inter-radio-access-technology handover thresholds to select one of the radio access technologies to provide the service according to the one or more quality of service requirements.

There is also provided computer program code which when run on a computer causes the computer to perform any of the methods described herein.

Further provided is a carrier medium carrying computer readable code which when run on a computer causes the computer to perform any of the methods described herein.

Furthermore, a telecommunications network is provided comprising a self-organizing network engine as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic diagram of a telecommunications network with centralized self-organizing network functionality;
Figure 2 is a schematic diagram of the telecommunications network of Figure 2 with distributed self-organizing network functionality;
Figure 3 is a schematic diagram of a network optimization interworking procedure between a centralized self-organizing network engine, an operation support system and a telecommunications network;
Figure 4 is a schematic diagram of a self-organizing network engine and an operation support system used with a telecommunications network having different user equipment service requirements, illustrating how an algorithm architecture of a self-organizing network optimizes the telecommunications network according to user service quality requirements, and in which the Service Quality Indicator is introduced as a key input for the SON algorithm;
Figure 5 is a flow diagram of a method at a self-organizing network engine, illustrating how an algorithm procedure of a self-organizing network optimizes a telecommunications network according to user service quality requirements, for example for voice, HTTP/FTP and video services;
Figure 6 is a schematic diagram of a computing device implementing a self-organizing network engine.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The inventors have found that it is possible to improve management and control of a telecommunications network such that quality of service requirements for different user equipment devices are met in a more efficient manner. Counter-based SON algorithms as described above have the drawback that the SON server cannot distinguish between individual users and maximize user experience. In the meantime, current SON solutions focus on network Key Performance Indicator (KPI) improvements and operational efficiency. There is lack of functionality taking individual user quality into account to optimize the network. The solution described herein provides service awareness self-optimization and focuses on improving individual user experience.

In the examples described herein, a self-organizing network engine is used to manage and control a telecommunications network. As a result of meeting the quality of service requirements in a more efficient manner, overall network performance is improved and faults, congestion and the need for maintenance is reduced.

A self-organizing network (SON) engine comprises computer-implemented functionality for executing an optimization algorithm which uses efficient methods to search huge numbers of combinations of possible values of parameters of a telecommunications network (such as a 2G, 3G, 4G mobile radio access network), to find solutions which are optimal according to one or more assessment metrics. For example, the parameters include but are not limited to hand-over parameters, antenna tilt parameters, pilot transmission power parameters, automatic neighbor relation parameters, and traffic load etc.. The assessment metric may comprise thresholds and or criteria to be met by telecommunications network performance data. Examples of telecommunications network performance data include but are not limited to key performance indicators such as dropped call rate, call setup failure rate. Examples of telecommunications network performance data also include service quality indicators (SQI) such as mean opinion score, delay, jitter, video resolution, video delay, number of video stalls, and frequency of video stalls as the key performance data for network optimization. Self-organizing network engine functionality may be centralized or distributed through a telecommunications network. Hybrid deployments using a mix of centralized and distributed SON technology may also be used. SON has been codified in 3GPP release 8 and other specifications.

An operation support system (OSS) is computer-implemented apparatus interfacing between a SON engine and telecommunications infrastructure. An example OSS is described in more detail below.

A service quality indicator (SQI) comprises data recorded by end user equipment devices or other telecommunications network nodes about quality of a specified telecommunications service being provided by the telecommunications network. For example, service quality indicators for video, voice and other services may be recorded. For example, a service quality indicator for voice service may comprise user feedback such as an opinion score entered by a user at an end user equipment or other device. A service quality indicator may comprise empirical data observed or monitored by end user equipment and/or other telecommunications network nodes.

The Third Generation Partnership Project (3GPP) introduced into Release 8 the concept of a Self-Organizing Network (SON), an intelligent platform that automatically optimizes 2G, 3G and 4G networks, and defined a set of use cases that govern a network including the planning, deployment, optimization and maintenance activities. 3GPP does not specify how to implement these use cases: SON vendors may implement the use cases using their own proprietary algorithms. The use cases include Automatic Neighbor Relations (ANR), Coverage and Capacity Optimization (CCO), Mobility Load Balancing (MLB), Mobility Robustness Optimization (MRO).

Automatic Neighbor Relations (ANR) is designed to optimize the neighbor relations by adding missing neighbor relations, deleting redundant neighbor relations, and prioritizing neighbor relations, in order to reduce the number of user calls dropped due to missing or incorrect neighbor relations. Correct and up-to-date neighboring lists will increase the number of successful handovers and minimize the number of dropped calls.

Coverage and Capacity Optimization (CCO) aims to optimize parameters relating to transmission power, antenna tilting and handover in order to balance the network coverage and capacity. Specific examples of parameters to be optimized during CCO include antenna remote electronic tilt (RET), primary CPICH (Common Pilot Channel) power, BCH (Broadcast Channel) power, AICH (Acquisition Indicator Channel) power, PCH (Paging Channel) power, PICH (Page Indication Channel) power, idle mode inter-RAT reselect threshold, idle mode inter-frequency reselect threshold, inter-RAT handover threshold, intra-frequency mobility parameters, and HSDPA (High Speed Downlink Packet Access) power.

Mobility Load Balancing (MLB) seeks to optimize the pilot transmission power, common channels power, and handover parameters to balance traffic or network load between different sites, different frequency layers, and different Radio Access Technologies (RAT) (2G/3G/LTE). MLB allows cells suffering congestion to transfer load to other cells which have spare resources, and includes load reporting to exchange information about load level and available capacity. In case of inter-RAT MLB, a load reporting protocol may be used to transfer information between base stations of different radio access technologies, so that the capacities of the different technologies can be compared and weighed against each other. Specific examples of parameters to be optimized during MLB include primary CPICH power and handover parameters.

MRO (Mobility Robustness Optimization) is a solution for automatic detection and correction of errors in the mobility configuration, and is designed to optimize the handover parameters to reduce the Radio Link Failure (RLF) due to handover occurring too early, too late, to an incorrect cell, and due to the so-called "Ping-Pong effect". Specific examples of parameters to be optimized during MRO include cell individual offset (CIO), time to trigger (TTT), trigger thresholds, hysteresis value for Ping-Pong control, neighbor list relation, speed-dependent parameters, antenna RET, and idle mode parameters to avoid immediate HO trigger when transitioning from idle to active states.

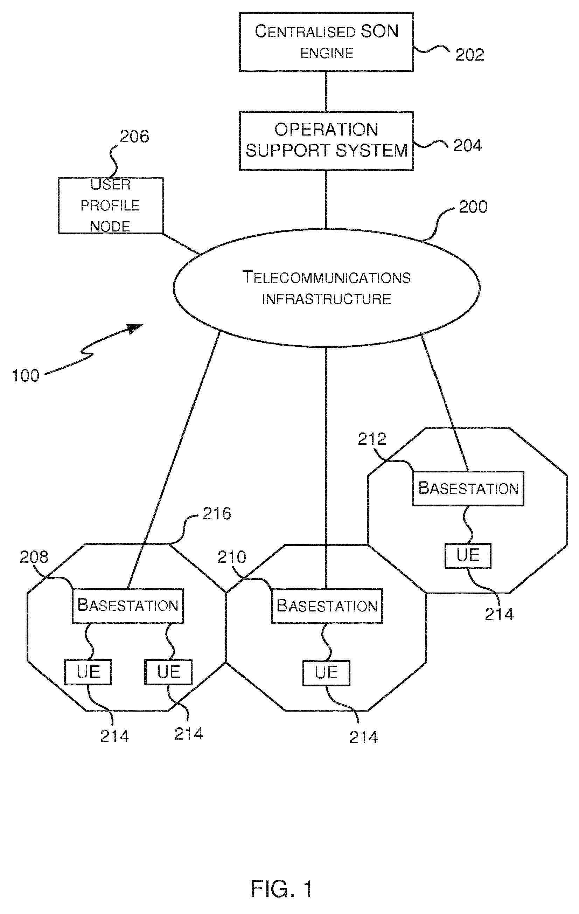

Figure 1 is a schematic diagram of a telecommunications network 100 comprising a plurality of user equipment devices 214. The telecommunications network comprises a plurality of communications network nodes connected by links. The links may be wired or wireless (for example, radio communications links, optical fiber). The telecommunications network 100 comprises functionality to enable quality of service requirements for different groups of end user equipment devices to be met in a more efficient manner. The functionality may be implemented in a self-organizing network engine in a centralized and/or distributed manner.

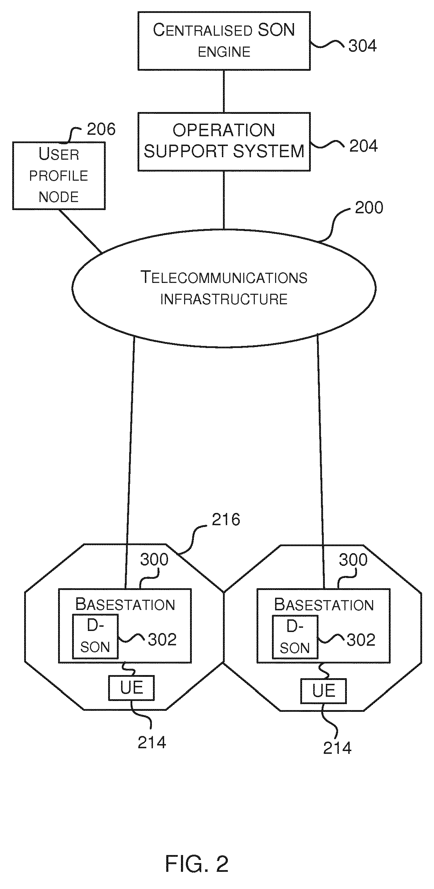

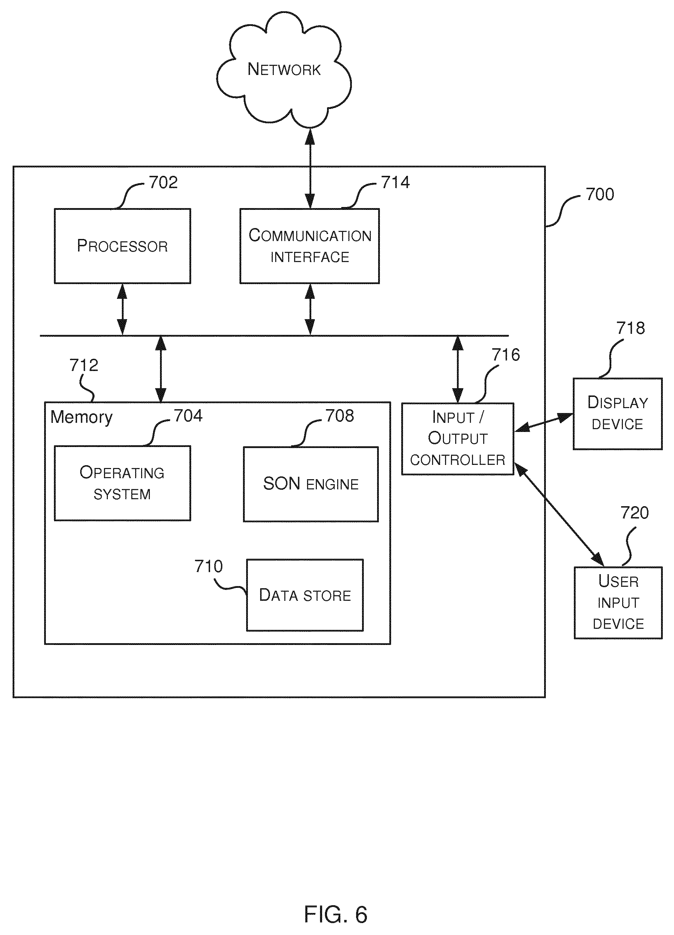

Figure 2 is a schematic diagram of the telecommunications network of Figure 1 with centralized self-organizing network functionality in the form of a centralized self-organizing network engine 202. The centralized self-organizing network engine 202 is connected to telecommunications infrastructure 200 of the telecommunications network 100 via an operation support system (OSS) 204. The centralized self-organizing network engine 202 is computer-implemented using, for example, a server or a group of servers. Figure 6 shows an example of a computing-based device implementing a self-organizing network engine.

The operation support system 204 is also computer-implemented and is arranged to interface with telecommunications infrastructure 200 comprising different types of telecommunications network nodes. These include base stations, switches, and routers. Telecommunications infrastructure 200 is in communication with base stations of a cellular telecommunications network such as base stations 208, 210, 212, each base station having a footprint indicated schematically in the figure as a hexagonal cell 216. User equipment devices 214 are able to receive services from the telecommunications network 100 such as voice, video and other services.

The operation support system 204 is configured to receive data from the telecommunications network such as performance statistics and other data. The operation support system 204 may compute higher level statistics from the performance data it receives, for example, by aggregating data after filtering out outliers. The operation support system 204 may probe the telecommunications network to obtain the performance data in some examples. The operation support system 204 comprises interfaces for interoperating with various different types of telecommunications network node, such as base stations and/or other nodes in the telecommunications infrastructure. In this way the operation support system is able to issue commands to telecommunications network nodes in order to control the behavior of those nodes.

In some examples a user profile node 206 is present, although this is not essential. The user profile node 206 comprises a store holding profiles, records or policy data. For example, there may be profiles for any one or more of: individual users, groups of users, specified types of service. A profile may comprise quality of service requirements such as thresholds or criteria which network performance statistics, and/or service quality indicators are to meet, as described in further detail below.

Figure 2 is a schematic diagram of the telecommunications network of Figure 2 with distributed self-organizing network functionality. For example, a SON component 302 is present at base stations 300. In this scenario network performance data and service quality indicators received at a base station 300 are made available to a local SON component 302 at the base station itself. The local SON component 302 carries out an optimization using the data available to it and communicates the results to the OSS 204 and/or uses the results locally to control parameters of the base station 300. The local SON component 302 is thus able to carry out a fast optimization process for immediate control of the base station. This local optimization and control may later be fine-tuned by commands received as a result of a SON optimization which takes into account data from a greater part of the telecommunications network. Local SON components may communicate their results to one another and/or to the OSS.

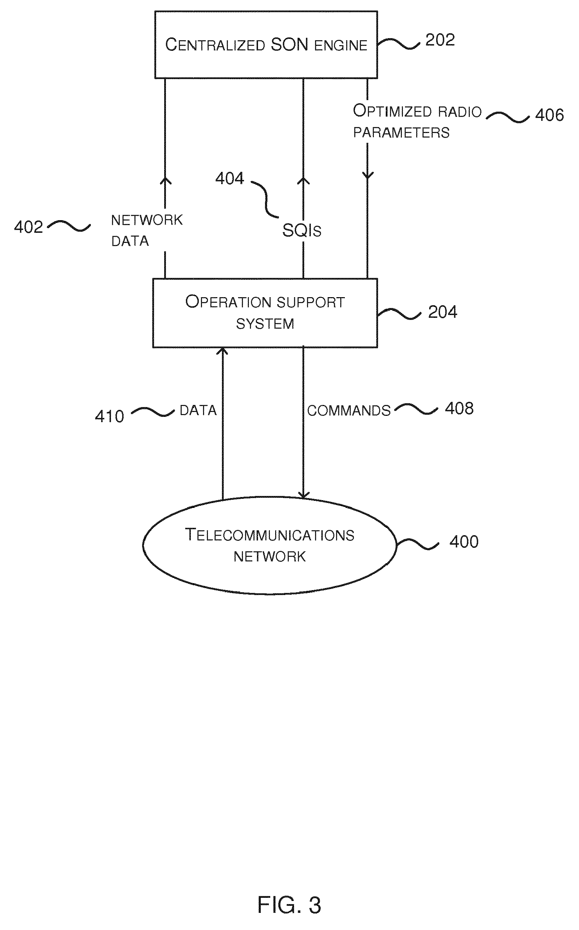

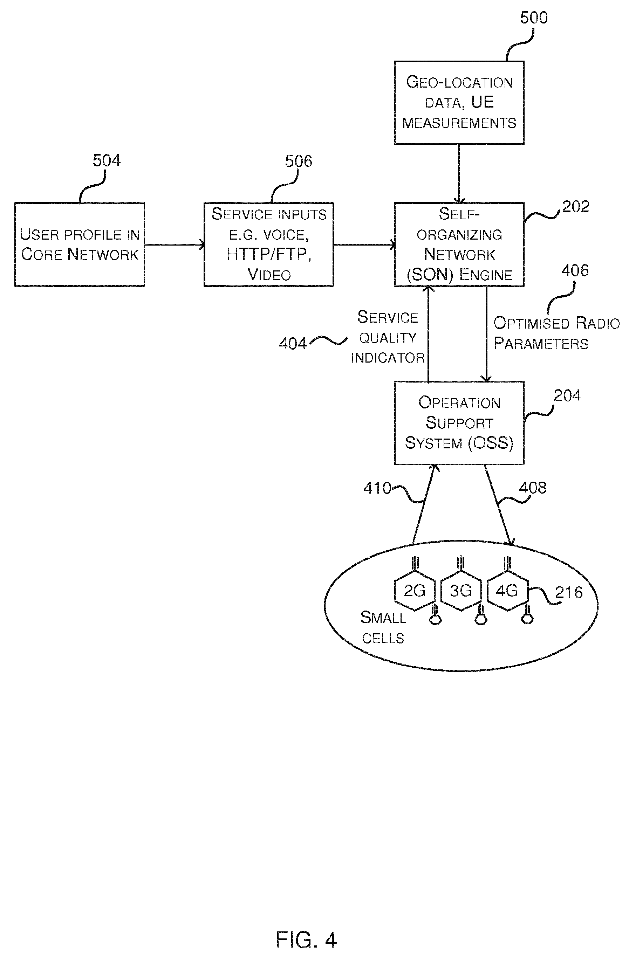

Figure 3 shows a telecommunications network 400 which outputs network performance data 410 to an operation support system 204. The operation support system 204 calculates higher level performance data 402, for example by aggregating and/or filtering the data 410. The operation support system sends the higher level performance data 402 to the SON engine 202. The operation support system may also send service quality indicators 404 to the SON engine 202. The service quality indicators are described in more detail below. The SON engine 202 carries out an optimization to search for a best set of values of radio parameters, or other network parameters, for reconfiguring the telecommunications network 400. The SON engine 202 sends the optimized radio parameters 406 to the OSS 204 which uses them to send commands 408 to nodes of the telecommunications network so that the reconfiguration is implemented. In the example of figure 4 both the network data 402 and the service quality indicators 404 are sent to and used by the SON engine 202. However, it is also possible to use only the network data 402 or only the SQIs 404.

Figure 4 is a schematic diagram of algorithm architecture of a self-organizing network which optimizes a telecommunications network according to user service quality requirements. Service Quality Indicator is introduced as a key input for the SON algorithm. In detail, a telecommunications network 400 to which a plurality of user equipment devices 214 may be connected is shown. The operation support system 204 is inter-connected between the telecommunications network 400 and the centralized self-organizing network (SON) engine 202. There may also be some distributed SON functionality in the telecommunications network as explained above with reference to Figure 2. The operation support system 204 obtains and/or calculates the network performance data 410 and thereby the service quality indicators 404 from the telecommunications network 400. For example, communications nodes (user equipment, base stations, and other infrastructure nodes) of the telecommunications network record empirically observed data and forward the data to the operation support system. In some examples, the service quality indicators 404 are input by end users and/or calculated from empirically observed data and are considered as key performance data in the SON algorithm to optimize the telecommunications network.

The SON engine 202 has access to one or more user profiles from a user profile 504 stored in the user profile node 206 mentioned above. Each profile 504 comprises quality of service requirements for one or more user equipment devices. For example, a user profile 504 comprises thresholds and/or criteria to be met by the telecommunications network when providing specified services to the user group (plurality of end user equipment devices). The thresholds may be for example, thresholds for service quality indicators and/or key performance indicators. One or more of the quality of service requirements are input to the SON engine 202 as service inputs 506, to be described later.

The SON engine 202 additionally receives user measurement data 500, comprising for example an identifier of a user equipment device such as an international mobile subscriber identity (IMSI), or other identifier. In some examples the user measurement data 500 comprises a reference to an identifier of a user equipment device. In some examples the user measurement data 500 comprises one or more of geo-location data and a user equipment measurement report.

The SON engine 202 applies the thresholds and/or criteria carried by the service inputs 506 when it carries out its optimization. The results of the optimization comprise the optimized radio parameters 406, which essentially specify a network reconfiguration for the telecommunications network 400 according to the quality of service requirements. The SON engine 202 commands the telecommunications network 400 to implement the network reconfiguration. This is achieved by sending the optimized radio parameters 406 (also referred to as network parameters) to the OSS 204, which interfaces with the telecommunications network 400 to implement the reconfiguration. For example, by directing the user equipment to a selected radio access technology. For example, by directing the user equipment to a selected network layer. For example, by reallocating network resources available to the user equipment.

In some examples the telecommunications network 400 comprises a plurality of radio access technologies, such as 2G, 3G, 4G, as illustrated in figure 4, and the optimized radio parameters 406 (which may also be referred to as network parameters) comprise one or more inter-radio-access-technology handover thresholds. The SON engine 202 may be configured to optimize the inter-radio-access-technology handover thresholds to select one of the radio access technologies to provide the service according to the quality of service requirements.

As described herein, the SQI 404 is used by the SON algorithms described below to optimize the telecommunications network 400, so as to meet the user's quality of service requirements and to maximize the user's experience. The SQI 404 may be defined for each service accordingly, and its matrix can be calculated by reusing existing network parameters. For example, for voice service, the SQI 404 may be defined by a combination of parameters including MOS (mean opinion score), delay, delayer jitter. An SQI matrix may be defined for new services. For example, for video service, the SQI 404 can be defined by a combination of parameters including video resolution, video delay, data rate required, and the number of video stalls. The SQI matrix can be expanded to any type of service. The SQI 404 is calculated at the operation support system 204 and is used as the primary performance indicator (instead of the KPI) for the SON engine 202 to optimize the radio access parameters. The optimized radio parameters 406 are sent to the radio access networks via the operation support system 204 to execute the optimization automatically. This may be carried out in closed-loop operation, i.e. the SQI 404 is fed into the SON engine 202, and the SON engine 202 generates the optimized radio parameters 406 according to the quality of service requirement defined by the SQI, whereupon the optimized radio parameters are executed, resulting in a new SQI 404 for the next cycle of parameter adjustment. The SQI matrix can use QoS metrics, e.g. for voice service the MOS, delay and delay jitter can be used. However, for new services such as video service, Machine-to-Machine service etc., the new SQI may be defined.

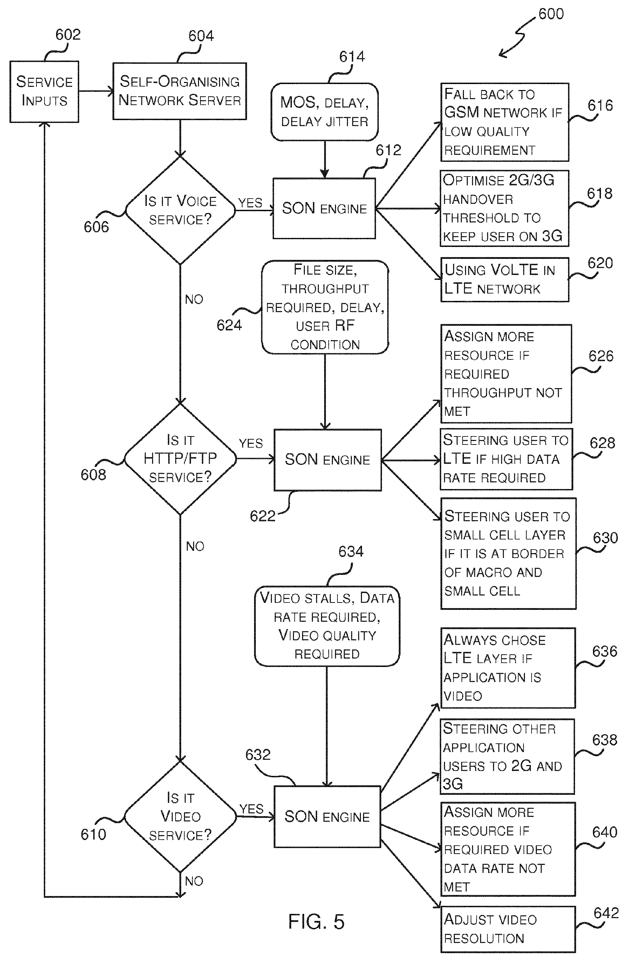

Figure 5 is a flow diagram of an example method 600 performed at the centralized SON engine 202 of figure 4 or at a distributed SON engine (or hybrid SON) 302. The service inputs 506 for the user are retrieved from the user profile 504 at 602 and passed to the SON engine at 604. At 606-610, the network user is classified into one of several different service groups according to the services actively being used, e.g. a voice service, an HTTP/FTP service, or a video service etc. For example, if the user makes a phone call, then it is classified as voice service. If the user is just browsing a website e.g. google search, then it is classified as HTTP/FTP service. If the user is watching a film from YouTube, then it is classified as video streaming service. For each of the service groups, the SON engine 202 may carry out an optimization algorithm to achieve higher network performance to attempt to meet the quality of service requirements specified in the user profile.

For example, the SON engine 202 implements an algorithm for voice services at 612, in response to the service being identified at 602 as a voice service. Service quality requirements (e.g. MOS, delay, delay jitter) derived from the user profile 504 via the service inputs 506 are input into the SON engine 202 at 614. In the meantime, the SON engine 202 may access user measurement data 500, for example the geo-location data or the user measurement report. The geo-location data will show the exact location of the user, which provides information such as the type of network available e.g. 2G, 3G or LTE for SON algorithm. The user measurement report also provides the radio condition where the user is, and this can be used in the SON algorithm e.g. if the end user is at a cell edge, then the radio condition is poor, then the SON algorithm might handover this user to a better radio network. According to these inputs, the SON voice algorithm selects a proper network layer for the user, e.g. if the voice quality required is low, the user can be steered at 616 to the GSM network. If the 3G network is a suitable layer, the SON voice algorithm can optimize the 2G/3G handover threshold at 618 to keep the user on the 3G network for a better experience. If voice over LTE (VoLTE) is feasible, then the SON voice algorithm can camp the user on the LTE network at 620. For example, if the voice requirements SQI =1 (i.e. MOS=3.8, delay=150ms, delay jitter =30ms), then this user can be served by the VoLTE network. Any requirements of MOS above 4.0, delay is shorter than 100ms and delay jitter is less than 30ms, then the voice service will be served by an available GSM or 3G network. Certainly these algorithms can be designed in the SON engine according to operator requirements.

In response to the service being identified at 608 as an HTTP/FTP service, the SON engine 202 implements at 622 an algorithm for web browsing services. Service quality requirements such as percentage of packet loss, packet error rate, user throughput required, and service delay allowed etc. are obtained from the user profile 504 and input to the SON engine 202 as the service inputs 506. According to the user measurement data 500 (for example RF condition), the SON web browsing algorithm can assign at 626 more radio resources to the user if the quality of service requirements are not met. In detail, the user measurement data 500 will provide the radio condition of the users, e.g. cell center or cell edge. If user is located at a cell edge, then the SON algorithm will trigger the network to assign more radio resources to this user to improve its performance. The SON web browsing algorithm can steer the user at 628 to different network layers, e.g. by handing over to LTE, if a high data rate is required. The SON web browsing algorithm also can camp the user to a macro cell layer or a small cell layer at 630, according to the quality of service requirements and the user measurement data 500. For example, for users located at the border of macro cell and small cells, the SON web browsing algorithm can steer these users to the small cell layer to provide better quality of service and to maximize the user experience. For example, if the requirements of an HTTP/FTP service are that throughput for downlink files is more than 5Mbps, the percentage of pack loss is about 1%, file downlink delay is less than 1 second, then the SON engine will steer this user to the LTE layer to provide the service quality required. Certainly the service quality matrix can be defined in the SON algorithm according to the operator's strategy.

In response to the service being identified at 610 as a video service, the SON engine 202 implements at 632 an algorithm for video services. Quality of service requirements for video such as the number of video stalls, video resolution, video delay, data rate required serve as the service inputs 206 for the SON video algorithm. The SON video algorithm can steer the user onto the LTE network at 636, while camping other service users (e.g. voice or web-browsing) onto the GSM and UMTS networks at 638. The SON video algorithm can assign more radio resources to high-quality video services, if feasible, at 640. If network resources are limited, and the SON engine 202 cannot steer users to a better network layer, then the SON video algorithm also can adjust the video resolution to minimize number of stalls at 642. For example, if the user requirements for video service are that video resolution is about 1280x720, video delay is less than 10ms, data rate required is above 10Mbps, and the number of video stream stalls is less than 5 within 1 hour of video streaming, then the SON engine will schedule this user to the LTE layer. Certainly the mapping between the service requirements to different network layer can be designed in the SON algorithm according to the operator's strategy.

The optimization process of figure 5 may repeat so that the telecommunications network is dynamically controlled.

Thus, as described herein, individual quality of service requirements are taken into account during optimization of the self-organizing network, as opposed to using a counter-based solution. The services offered by the network can be grouped into different categories, for example, voice service, web browsing service (HTTP/FTP based), (on-demand) video service, etc. The quality of service requirements for each service category can be derived from the user profile 504 stored in the core network.

Previous SON solutions have been KPI (key performance indication) driven and have focused on network performance improvement, e.g. dropped call rate, call setup failure rate. In this approach, it is impossible to distinguish an individual user's requirements and to optimize the network resources to improve user experience.

In summary, the subject-matter described herein provides service awareness, in that the self-organizing network optimization improves user experience (unlike previous counter-based solutions). The service quality indicator (SQI) is utilized for network optimization instead of the network KPI. The subject-matter furthermore provides for automatic translation of user quality of service requirements into optimization mechanisms. As an additional benefit, the subject-matter described herein could also be used to provide input for network expansion, e.g. it could indicate in which location a small cell is needed to meet user experience requirements. The principle concept of the invention is that the SON engine and algorithms are configured based on each service type, e.g. voice service, HTTP/FTP service, video service, M2M service or any other new services. Currently the SON engine and algorithms are configured only by network wide KPIs (key performance indicator) e.g. drop call rate, call setup failure rate etc. There is no typically any SON solution considering the service being provided to the user and preferably whether the service requirement for each type of service is being satisfied. To do this, it is proposed herein to optimize the network for each type service using a new measure, the SQI. This is designed as an input for SON optimization. The SQI matrix is proposed herein and depends on service, for example, the SQI for voice service could be the conventional QoS such as MOS, delay and delay jitter. However for new type of services e.g. video service, M2M service, conventional QoS may be supplemented and the SQI for these new type of services could be designed in the SON algorithm, for example video service, the user satisfaction factors which presented by numbers of stalls in a video, how long of the buffering of a video etc. could be configured as SQI matrix. These parameters are not the conventional QoS, but present user quality of experience which will be considered in the new SON solution.

Figure 6 illustrates various components of an exemplary computing-based device 600 which may be implemented as any form of a computing and/or electronic device, and in which embodiments of a self-organizing network engine may be implemented.

Computing-based device 700 comprises one or more processors 702 which may be microprocessors, controllers or any other suitable type of processors for processing computer executable instructions to control the operation of the device in order to receive data from an OSS and compute optimized parameters of a telecommunications network. In some examples, for example where a system on a chip architecture is used, the processors 702 may include one or more fixed function blocks (also referred to as accelerators) which implement a part of the method of figure 5 in hardware (rather than software or firmware). Platform software comprising an operating system 704 or any other suitable platform software may be provided at the computing-based device to enable application software to be executed on the device. Software comprising a self-organizing network engine 706 may be provided at the computing-based device and data store 710 may hold telecommunications network parameters, network performance data, service quality indicators or other data.

The computer executable instructions may be provided using any computer-readable media that is accessible by computing based device 700. Computer-readable media may include, for example, computer storage media such as memory 712 and communications media. Computer storage media, such as memory 712, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 712) is shown within the computing-based device 700 it will be appreciated that the storage may be distributed or located remotely and accessed via a network or other communication link (e.g. using communication interface 714).

The computing-based device 700 also comprises an input/output controller 716 arranged to output display information to a display device 718 which may be separate from or integral to the computing-based device 700. The display information may provide a graphical user interface. The input/output controller 716 is also arranged to receive and process input from one or more devices, such as a user input device 720 (e.g. a mouse or a keyboard). This user input may be used to set thresholds or criteria, configure optimization algorithms, view optimization results. In an embodiment the display device 718 may also act as the user input device 720 if it is a touch sensitive display device. The input/output controller 716 may also output data to devices other than the display device, e.g. a locally connected printing device.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A self-organizing network engine, configured to:
receive one or more quality of service indicators describing a quality of service experienced by a user equipment device when receiving a service from a telecommunications network comprising the self-organizing network engine;
obtain, from a profile relating to the user equipment, one or more quality of service requirements for the service being received;
determine a network reconfiguration for the telecommunications network according to the one or more quality of service requirements and the one or more quality of service indicators; and
command the telecommunications network to implement the network reconfiguration.

2. The self-organizing network engine of claim 1, wherein the network reconfiguration comprises directing the user equipment device to a selected radio access technology.

3. The self-organizing network engine of claim 1 or 2, wherein the network reconfiguration comprises directing the user equipment device to a selected network layer.

4. The self-organizing network engine of any preceding claim, wherein the network reconfiguration comprises reallocating network resources available to the user equipment device.

5. The self-organizing network engine of any preceding claim, further configured to determine the network reconfiguration by optimizing one or more network parameters.

6. The self-organizing network engine of claim 5, wherein the telecommunications network comprises a plurality of radio access technologies, and wherein the network parameters comprise one or more inter-radio-access-technology handover thresholds, the self-organizing network engine being configured to optimize the inter-radio-access-technology handover thresholds to select one of the radio access technologies to provide the service according to the one or more quality of service requirements.

7. The self-organizing network engine of any preceding claim, wherein the one or more quality of service indicators comprise a matrix storing one or more quality of service indicators for each of a plurality of services offered by the telecommunications network.

8. A computer-implemented method of optimizing a telecommunications network, comprising:
receiving one or more quality of service indicators describing a quality of service experienced by a user equipment when receiving a service from the telecommunications network;
obtaining, from a profile relating to the user equipment, one or more quality of service requirements for the service being received;
determining a network reconfiguration for the telecommunications network according to the one or more quality of service requirements and the one or more quality of service indicators; and
commanding the telecommunications network to implement the network reconfiguration.

9. The method of claim 8, wherein the network reconfiguration comprises directing the user equipment to a selected radio access technology.

10. The method of claim 8 or 9, wherein the network reconfiguration comprises directing the user equipment to a selected network layer.

11. The method of any of claims 8-10, wherein the network reconfiguration comprises reallocating network resources available to the user equipment.

12. The method of any of claims 8-11, further comprising determining the network reconfiguration by optimizing one or more network parameters.

13. The method of claim 12, wherein the telecommunications network comprises a plurality of radio access technologies, and wherein the network parameters comprise one or more inter-radio-access-technology handover thresholds, the method comprising optimizing the inter-radio-access-technology handover thresholds to select one of the radio access technologies to provide the service according to the one or more quality of service requirements.

14. The method of any of claims 8-13, wherein the one or more quality of service indicators comprise a matrix storing one or more quality of service indicators for each of a plurality of services offered by the telecommunications network.

15. Computer program code which when run on a computer causes the computer to perform a method according to any of claims 8-14.

16. A carrier medium carrying computer readable code which when run on a computer causes the computer to perform a method according to any of claims 8-14.

17. A telecommunications network comprising a self-organizing network engine as claimed in any of claims 1-7.

18. A self-organizing network engine of a telecommunications network, configured to:
identify a service being provided to a user equipment (UE);
determine a network reconfiguration for the telecommunications network according to the service being provided; and,
command the telecommunications network to implement the network reconfiguration.

19. The self-organizing network engine of claim 18, wherein the user equipment is classified into a group according to the service being provided and wherein the network reconfiguration is determined from a set of predetermined reconfigurations based upon the group in which the user equipment has been placed.

20. The self-organizing network engine of claim 18 or 19, wherein the engine is configured to receive one or more service quality indicators describing a quality of service experienced by the user equipment when receiving the service from the telecommunications network comprising the self-organizing network engine and wherein the engine is further configured to determine a network reconfiguration for the telecommunications network according to the service being provided and the service quality indicator received.

21. The self-organizing network engine of any of claims 18 to 20, wherein the network reconfiguration comprises directing the user equipment device to a selected radio access technology.

22. The self-organizing network engine of any of claims 18 or 21, wherein the network reconfiguration comprises directing the user equipment device to a selected network layer.

23. The self-organizing network engine of any of claims 18 to 22, wherein the network reconfiguration comprises reallocating network resources available to the user equipment device.

24. The self-organizing network engine of any of claims 18 to 23, further configured to determine the network reconfiguration by optimizing one or more network parameters.

25. The self-organizing network engine of claim 24, wherein the telecommunications network comprises a plurality of radio access technologies, and wherein the network parameters comprise one or more inter-radio-access-technology handover thresholds, the self-organizing network engine being configured to optimize the inter-radio-access-technology handover thresholds to select one of the radio access technologies to provide the service according to the one or more quality of service requirements.

26. The self-organizing network engine of any of claim 20 to 25, wherein the one or more service quality indicator comprises a matrix storing one or more quality of service indicators for each of a plurality of services offered by the telecommunications network.

27. A method of optimizing a telecommunications network, comprising:
identifying a service being provided to a user equipment (UE);
determining a network reconfiguration for the telecommunications network according to the service being provided; and,
commanding the telecommunications network to implement the network reconfiguration.

28. The method of claim 27, further comprising classifying the user equipment into a group according to the service being provided and determining the network reconfiguration from a set of predetermined reconfigurations based upon the group in which the user equipment has been placed.

29. The method of claim 27 or 28, further comprising receiving one or more service quality indicators describing a quality of service experienced by the user equipment when receiving the service from the telecommunications network comprising the self-organizing network engine and wherein the method further comprises determining a network reconfiguration for the telecommunications network according to the service being provided and the service quality indicator received.

30. The method of any of claims 27 to 29, wherein the network reconfiguration comprises directing the user equipment device to a selected radio access technology.

31. The method of any of claims 27 to 30, wherein the network reconfiguration comprises directing the user equipment device to a selected network layer.

32. The method of any of claims 27 to 31, wherein the network reconfiguration comprises reallocating network resources available to the user equipment device.

33. The method of any of claims 27 to 32, further comprising determining the network reconfiguration by optimizing one or more network parameters.

34. The method of claim 33, wherein the telecommunications network comprises a plurality of radio access technologies, and wherein the network parameters comprise one or more inter-radio-access-technology handover thresholds, the self-organizing network engine being configured to optimize the inter-radio-access-technology handover thresholds to select one of the radio access technologies to provide the service according to the one or more quality of service requirements.

35. The method of any of claim 29 to 34, wherein the service quality indicator comprises a matrix storing one or more quality of service indicators for each of a plurality of services offered by the telecommunications network.

36. A carrier medium carrying computer readable code which when run on a computer causes the computer to perform a method according to any of claims 27-35.

37. A telecommunications network comprising a self-organizing network engine as claimed in any of claims 18-26.
